(19)

**Europäisches Patentamt**

**European Patent Office**

**Office européen des brevets**

(11)    **EP 1 312 998 B1**

(12)    **FASCICULE DE BREVET EUROPEEN**

(45) Date de publication et mention
de la délivrance du brevet:
**11.01.2006 Bulletin 2006/02**

(51) Int Cl.:
*G05D 1/08* (2006.01)

(21) Numéro de dépôt: **02292412.0**

(22) Date de dépôt: **01.10.2002**

(54) **Procédé et dispositif pour déterminer en temps réel le comportement d'un mobile, en particulier d'un aéronef**

Verfahren und Vorrichtung zur Echtzeitbestimmung des Verhaltens eines Fahrzeugs, insbesondere eines Flugzeuges

Method and device for real-time determining the behaviour of a vehicle, in particular of an aircraft

(84) Etats contractants désignés:
**GB IT**

(30) Priorité: **18.10.2001 FR 0113435**

(43) Date de publication de la demande:
**21.05.2003 Bulletin 2003/21**

(73) Titulaire: **EUROCOPTER**
**13725 Marignane Cédex (FR)**

(72) Inventeur: **Eglin, Paul**
**13100 Aix-en-Provence (FR)**

(74) Mandataire: **Renaud-Goud, Thierry et al**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
**US-A- 5 606 505**

• **GORREC LE Y ET AL: "MODAL MULTIMODEL CONTROL DESIGN APPROACH APPLIED TO AIRCRAFT AUTOPILOT DESIGN" JOURNAL OF GUIDANCE AND CONTROL AND DYNAMICS, AIAA. NEW YORK, US, vol. 21, no. 1, 1998, pages 77-83, XP000780035 ISSN: 0731-5090**
• **CHARLET B ET AL: "Dynamic feedback linearization with application to aircraft control" 1998 XP010071203 * le document en entier ***
• **TISCHLER M B: "ASSESSMENT OF DIGITAL FLIGHT-CONTROL TECHNOLOGY FOR ADVANCED COMBAT ROTORCRAFT" JOURNAL OF THE AMERICAN HELICOPTER SOCIETY, AMERICAN HELICOPTER SOCIETY. NEW YORK, US, vol. 34, no. 4, 1 octobre 1989 (1989-10-01), pages 66-76, XP000132622 ISSN: 0002-8711**

## Description

La présente invention concerne un procédé et un dispositif pour déterminer en temps réel le comportement d'un mobile, en particulier d'un aéronef.

On sait que, pour de nombreuses applications relatives à un aéronef, tel qu'un avion ou un hélicoptère, en particulier pour des simulations pilotées, il est nécessaire de connaître le comportement de l'aéronef, c'est-à-dire l'ensemble de ses mouvements, dans tout le domaine de vol simulé de cet aéronef. Pour estimer ce comportement, on réalise généralement une modélisation des différents mouvements à prendre en compte. Deux types de modélisation peuvent être utilisés à cet effet : une modélisation non linéaire et une modélisation linéaire.

On connaît, par le document US-A 5 606 505 un procédé pour estimer les performances d'un avion en vol, à l'aide notamment d'un filtre de Kalman, incluant une modélisation d'une relation poussée-moins-traînée réalisée avec au moins un modèle mathématique non linéaire utilisant des données spécifiques de l'avion et des paramètres d'entrée relatifs aux performances.

Une modélisation non linéaire, qui permet de décrire le comportement de l'aéronef par un modèle non linéaire utilisant des équations de mécanique de vol, s'établit à partir de la connaissance des forces qui agissent sur l'aéronef. A ce sujet, on sait, par exemple, que les forces aérodynamiques évoluent avec le carré de la vitesse par rapport à l'air ou qu'une voilure tournante d'un hélicoptère engendre des effets inertiels non linéaires.

Un modèle non linéaire représente très fidèlement la réalité avec une description rigoureuse et complète des forces et des moments qui agissent sur l'aéronef. De plus, il est valable sur tout le domaine de vol de l'aéronef.

Toutefois, une telle modélisation non linéaire présente plusieurs inconvénients :

- elle est complexe et difficile à mettre en oeuvre ;

- elle nécessite une durée de calcul très longue ; et

- une correction du modèle non linéaire correspondant, qui suppose une très bonne connaissance des équations du modèle et de leurs paramètres pour identifier les paramètres influents et prévoir des modifications appropriées, est très complexe et difficile à mettre en oeuvre.

En revanche, une modélisation linéaire qui permet de décrire les mouvements d'un aéronef par une équation linéaire (le plus souvent vectorielle, on fait alors appel à une représentation d'état) représente les états de l'aéronef par des relations très simples. Les paramètres qui composent ces relations sont les amortissements, les stabilités et les couplages de l'aéronef, ainsi que les sensibilités de commande directement ressenties par le pilote. Ces paramètres sont donc facilement recalables par rapport au vol.

Une telle modélisation linéaire est donc simple et peut être mise en oeuvre et corrigée, rapidement et facilement.

Toutefois, elle présente un inconvénient important. Cette modélisation linéaire n'est valable que localement, autour d'un état d'équilibre. Son domaine de validité est en principe limité :

- en amplitude (on est contraint de se déplacer suivant une "tangente" au point d'équilibre) ; et
- en fréquence (le nombre de modes propres qu'un modèle linéaire peut reproduire est directement lié à la dimension de son vecteur d'état).

Malgré tous ses avantages, cette modélisation linéaire ne peut donc pas être utilisée pour estimer, à tout instant et dans tout le domaine de vol, le comportement d'un aéronef.

La présente invention a pour objet de remédier à ces inconvénients. Elle concerne un procédé pour déterminer en temps réel, facilement et à coût réduit, le comportement d'un mobile, en particulier d'un aéronef, et ceci sur tout le domaine de fonctionnement de ce mobile.

A cet effet, selon l'invention, ledit procédé est remarquable en ce que l'on réalise, de façon répétitive, les opérations successives suivantes :

a) à partir d'un modèle linéaire courant modélisant le comportement du mobile, on détermine un vecteur λ illustrant un état d'équilibre ;
b) à partir de ce vecteur λ, on détermine les valeurs à l'équilibre de paramètres dudit modèle linéaire ;
c) à partir d'au moins certaines de ces valeurs, on calcule la composante dynamique du comportement du mobile ; et
d) on introduit cette composante dynamique dans ledit modèle linéaire pour obtenir un nouveau modèle linéaire courant et en déduire le comportement dudit mobile.

Ainsi, grâce à l'invention, on utilise un modèle linéaire qui présente de nombreux avantages (simplicité, rapidité de calcul, ...), comme précité. De plus, grâce à sa mise à jour continuelle, ce modèle linéaire est utilisable sans restriction sur tout le domaine de fonctionnement (domaine de vol dans le cas d'un aéronef) du mobile.

De plus, ledit procédé conforme à l'invention peut être mis en oeuvre pour tout type de mobile (hélicoptère, avion, automobile, fusée, missile, ...) volant ou non.

De façon avantageuse, les paramètres du modèle linéaire, dont on détermine les valeurs à l'étape, b), sont :

- un vecteur d'état ;
- un vecteur de commande ;
- un vecteur d'observation ;
- une matrice d'état ;
- une matrice de commande ; et
- une matrice d'observation.

Selon l'invention, on détermine à l'étape b) les valeurs desdits paramètres :

α) à l'aide d'un modèle non linéaire, ce qui est toutefois assez lourd, car il est nécessaire de déterminer les valeurs à chaque cycle ; ou

β) à l'aide d'une base de données préétablie ; ou

γ) à l'aide de relations, par exemple des régressions polynomiales, qui permettent de définir ces paramètres directement à partir du vecteur λ, ce qui correspond à un mode de réalisation simplifié ; ou

δ) à l'aide d'une combinaison d'au moins deux des méthodes α), β) et γ) précédentes.

La base de données (utilisée dans la méthode β précitée) peut être réactualisée à volonté sans contrainte (sur la dimension des vecteurs et matrices qui la composent) autre que la capacité du calculateur utilisé. Selon l'invention, cette base de données peut être établie :

- soit à l'aide d'un modèle non linéaire ;
- soit à partir de mesures réalisées lors d'au moins un déplacement dudit mobile. Dans ce dernier cas, on obtient un modèle particulièrement fidèle à la réalité.

La présente invention concerne également un dispositif pour déterminer en temps réel le comportement d'un mobile, en particulier d'un aéronef, et susceptible de mettre en oeuvre le procédé précité.

Selon l'invention, ledit dispositif est remarquable en ce qu'il comporte :

- des premiers moyens pour déterminer, à partir d'un modèle linéaire courant modélisant le comportement du mobile, un vecteur λ illustrant un état d'équilibre ;
- des deuxièmes moyens reliés auxdits premiers moyens, pour déterminer, à partir de ce vecteur λ, les valeurs à l'équilibre de paramètres dudit modèle linéaire ;
- des troisièmes moyens reliés auxdits deuxièmes moyens, pour calculer, à partir d'au moins certaines de ces valeurs, la composante dynamique du comportement du mobile ; et
- des quatrièmes moyens reliés auxdits premiers et troisièmes moyens, pour introduire cette composante dynamique dans ledit modèle linéaire de manière à obtenir un nouveau modèle linéaire courant et en déduire le comportement dudit mobile.

Les figures du dessin annexé feront bien comprendre comment l'invention peut être réalisée.

La figure 1 est le schéma synoptique d'un dispositif conforme à l'invention.

La figure 2 représente un graphique présentant l'évolution de la commande de tangage d'un hélicoptère au cours d'une accélération/décélération en palier, qui permet de bien mettre en évidence l'action du procédé conforme à la présente invention.

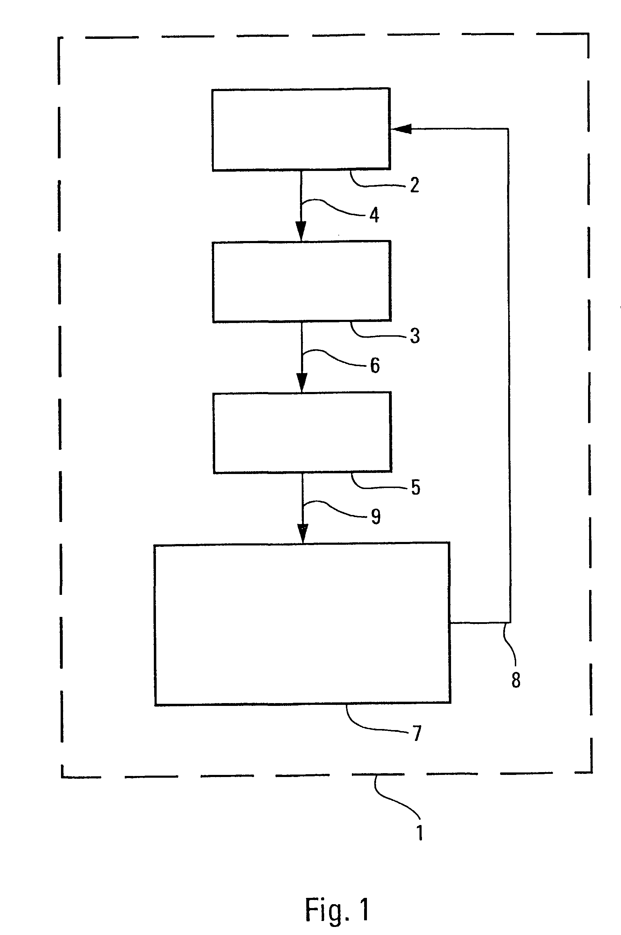

Le dispositif 1 représenté schématiquement sur la figure 1 et conforme à l'invention, est destiné à déterminer en temps réel le comportement d'un mobile non représenté, en particulier d'un aéronef et notamment d'un hélicoptère.

A cet effet, ledit dispositif 1 réalise une modélisation linéaire des mouvements du mobile, comme précisé ci-dessous.

Tout d'abord, on illustre le principe de linéarisation, en considérant un modèle régi par des équations non linéaires :

$$\begin{cases} \dot{X} = f(X,U) & \text{(équation d'état)} \\ Y = g(X,U) & \text{(équation d'observation)} \end{cases}$$

avec :

- X : vecteur d'état (dimension n)
- U : vecteur de commande (dimension m)
- Y : vecteur d'observation (dimension p)

La linéarisation d'un modèle non linéaire se base d'abord sur un équilibre. On satisfait pour cela la condition suivante (sachant qu'il existe une infinité d'équilibres possibles) :

$$0 = f(X0,U0)$$

Par une hypothèse de petits mouvements (x, u, y), on obtient autour de l'équilibre :

- X = XO + x
- U = UO + u
- Y = YO + y.

Par une méthode de dérivation, on estime les matrices d'état A, de commande B et d'observation C et D du modèle linéaire tangent au point d'équilibre (XO, UO, YO). Ce modèle est régi par la loi de comportement suivante :

$$\begin{cases} \dot{x} = A.x + B.u \\ y = C.x + D.u \end{cases}$$

Les composantes des matrices A, B, C et D sont obtenues par dérivation, respectivement à partir des relations suivantes :

$$\begin{cases} aij = \dfrac{\partial fi}{\partial Xj}(X0,U0) \\[2em] bij = \dfrac{\partial fi}{\partial Uj}(X0,U0) \\[2em] cij = \dfrac{\partial gi}{\partial Xj}(X0,U0) \\[2em] dij = \dfrac{\partial gi}{\partial Uj}(X0,U0) \end{cases}$$

Ledit dispositif 1 qui met en oeuvre le procédé conforme à l'invention et qui est, par exemple, intégré dans un calculateur ou réalisé sous forme d'un calculateur comporte, selon l'invention :

- des premiers moyens 2, pour déterminer, à partir d'un modèle linéaire courant précisé ci-dessous, qui modélise le comportement du mobile, un vecteur λ illustrant un état d'équilibre :

$$\lambda = \lambda\,(X,Y,U)\ ;$$

- des deuxièmes moyens 3 reliés par une liaison 4 auxdits premiers moyens 2, pour déterminer, à partir de ce vecteur λ, les valeurs à l'équilibre de paramètres [matrice d'état A, matrice de commande B, matrices d'observation C et D, point d'équilibre (XO,UO,YO)] dudit modèle linéaire :

- XO = XO(λ)
- UO = UO(λ)
- YO = YO(λ)
- A = A(λ)
- B = B(λ)
- C = C(λ)
- D = D(λ) ;

- des troisièmes moyens 5 reliés par une liaison 6 auxdits deuxièmes moyens 4, pour calculer, à partir d'au moins certaines (XO et UO) de ces valeurs, la composante dynamique du comportement du mobile :

$$\begin{cases} x = X - XO \\ u = U - UO \end{cases} ;$$

et

- des quatrièmes moyens 7 reliés respectivement par des liaisons 8 et 9 auxdits premiers et troisièmes moyens 2 et 5, pour introduire cette composante dynamique dans ledit modèle linéaire de manière à obtenir un nouveau modèle linéaire courant (et en déduire le comportement dudit mobile) :

$$\begin{cases} dx\,/\,dt = A.x + B.u \\ x = \int (dx\,/\,dt).dt \\ y = C.x + D.u \\ X = XO + x \\ Y = YO + y \end{cases}$$

Selon l'invention, lesdits moyens 2, 3, 5 et 7 réalisent leurs traitements respectifs précités de façon répétitive et successive.

Les moyens 7 réalisent la mise en oeuvre du modèle linéaire (isolé). Ceci correspond à la partie habituellement résolue et qui n'est valide que pour un seul point de fonctionnement du mobile, en particulier pour un point de vol dans le cas d'un aéronef.

En outre, les moyens 2 et 3 permettent d'identifier l'équilibre auquel le point de fonctionnement courant (point de vol courant) [qui est contenu dans le vecteur d'état X] se réfère. L'équilibre est alors caractérisé par le vecteur λ. La dimension et les composantes de ce vecteur λ sont fixées en fonction du rapport représentativité/complexité recherché pour le dispositif 1.

On notera que, pour un hélicoptère par exemple, un bon exemple de composante de λ peut être la vitesse d'avancement en palier VH qui, comme on le sait, a un effet fortement non linéaire sur le comportement de l'hélicoptère.

Par ailleurs, les moyens 5 permettent par soustraction de déduire la part dynamique du comportement du mobile.

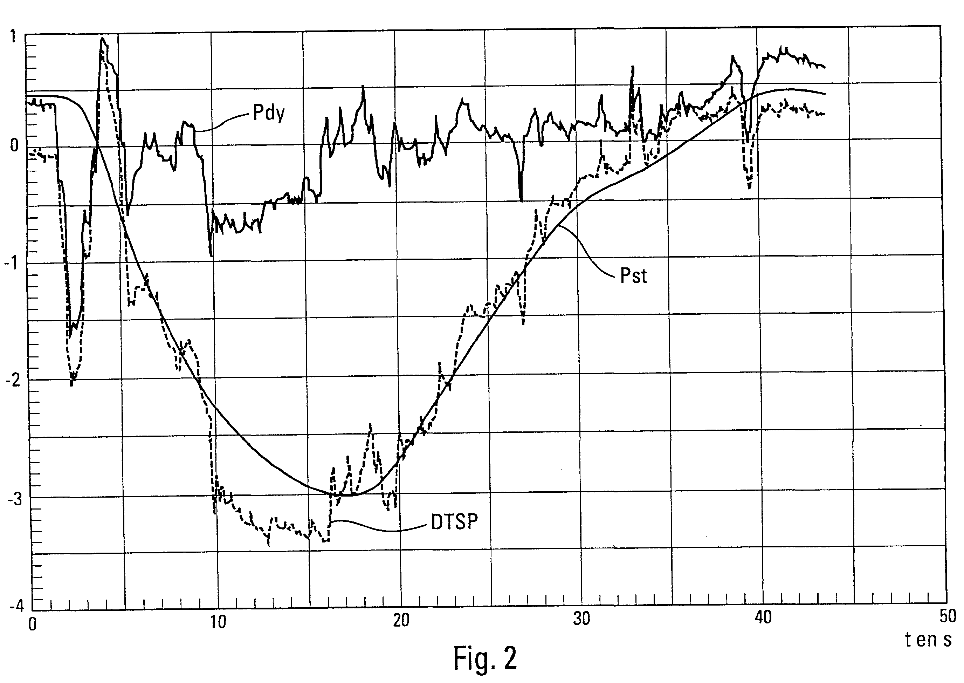

La figure 2 montre un exemple de l'efficacité de cette identification. Cette figure 2 représente, pour un hélicoptère, l'évolution de la commande de tangage DTSP au cours d'une accélération/décélération en palier, en fonction du temps t exprimé en secondes s. La commande DTSP est décomposée en une partie statique Pst et une partie dynamique Pdy. La partie statique Pst apparaît clairement lissée, la partie dynamique Pdy reste, quant à elle, centrée autour de 0 et contient toutes les informations de "hautes fréquences". L'un des avantages du procédé conforme à l'invention (qui prévoit le vecteur $\lambda$ caractérisant l'équilibre) est que cette séparation statique/dynamique se fait sans introduction de retard, alors que si l'on avait employé un filtre extérieur aux équations, on aurait introduit un retard dans l'identification de X0, U0, Y0 dégradant fortement la qualité du résultat. De plus, un filtre extérieur aurait dû faire l'objet d'un réglage en fréquence de coupure, problème compliqué, cette fréquence pouvant être variable suivant le mobile simulé ou le point de fonctionnement. Le procédé conforme à l'invention est optimal, car il met en oeuvre un filtrage auto-adapté.

Ainsi, grâce à l'invention, on est en mesure de changer de manière continue de modèle linéaire, en fonction du point de fonctionnement courant (point de vol courant par exemple). A chaque instant de la mise en oeuvre du procédé, on est capable d'identifier et de calculer :

- l'équilibre XO, UO, YO, auquel le point de fonctionnement se rapporte ;
- les paramètres du modèle linéaire (matrices A, B, C et D) associés à cet équilibre ; et
- la part dynamique Pdy dans le vecteur d'état X, cette dernière étant la seule qu'il faut injecter dans le modèle linéaire. Cela revient à faire un filtrage du vecteur d'état X.

La présente invention permet donc d'utiliser, pour déterminer le comportement d'un mobile, un modèle linéaire qui présente de nombreux avantages (simplicité, rapidité de calcul, ...), et ceci sur tout le domaine de fonctionnement du mobile.

Le procédé conforme à l'invention est destiné principalement à des applications en temps réel (simulations pilotées). Son utilisation peut concerner tous types de mobiles (hélicoptère, avion, automobile, fusée, missile, ...), qu'ils soient volants ou non.

Ledit modèle linéaire peut être évolutif, aussi bien dans sa base de données que dans son niveau de modélisation.

Selon l'invention, les moyens 3 déterminent les valeurs des paramètres A, B, C, D, XO, UO et YO du modèle linéaire :

$\alpha$) à l'aide d'un modèle non linéaire, ce qui est toutefois assez lourd, car il est nécessaire de déterminer les valeurs à chaque cycle ; ou

$\beta$) à l'aide d'une base de données préétablie ; ou

$\gamma$) à l'aide d'une loi, par exemple une régression polynomiale, permettant de définir ces paramètres directement à partir du vecteur $\lambda$, ce qui correspond à un mode de réalisation simplifié ; ou

$\delta$) à l'aide d'une combinaison d'au moins deux des méthodes $\alpha$), $\beta$) et $\gamma$) précédentes.

La base de données utilisée dans la méthode $\beta$ précitée peut être établie :

- soit à l'aide d'un modèle non linéaire ;
- soit par une identification sur des résultats mesurés lors d'au moins un déplacement du mobile.

Ladite base de données (matrices A, B, C, D et vecteurs d'équilibre XO, UO, YO) peut être réactualisée à volonté sans contrainte sur la dimension des vecteurs et des matrices qui la composent, autre que la capacité du calculateur utilisé. De plus, si cette base de données provient d'identifications expérimentales sur un mobile réel, on est alors en mesure de reproduire avec le modèle correspondant un comportement extrêmement proche de la réalité.

Tout comme un modèle non linéaire usuel, ledit modèle peut recevoir des modules de calcul supplémentaires destinés à enrichir sa représentativité. Dans le cas d'un hélicoptère, on peut citer à titre d'exemple les adaptations suivantes :

- prise en compte de l'effet du vent ;
- prise en compte de l'effet de sol ;
- rajout d'un modèle de train d'atterrissage.

**Revendications**

1. Procédé pour déterminer en temps réel le comportement d'un mobile, en particulier d'un aéronef, **caractérisé en ce que** l'on réalise, de façon répétitive, les opérations successives suivantes :

a) à partir d'un modèle linéaire courant modélisant le comportement du mobile, on détermine un vecteur $\lambda$

illustrant un état d'équilibre ;

b) à partir de ce vecteur λ, on détermine les valeurs à l'équilibre de paramètres dudit modèle linéaire ;

c) à partir d'au moins certaines de ces valeurs, on calcule la composante dynamique du comportement du mobile ; et

d) on introduit cette composante dynamique dans ledit modèle linéaire pour obtenir un nouveau modèle linéaire courant et en déduire le comportement dudit mobile.

2. Procédé selon la revendication 1,
**caractérisé en ce que** les paramètres du modèle linéaire, dont on détermine les valeurs à l'étape b), sont :

- un vecteur d'état ;
- un vecteur de commande ;
- un vecteur d'observation ;
- une matrice d'état ;
- une matrice de commande ; et
- une matrice d'observation.

3. Procédé selon l'une des revendications 1 et 2,
**caractérisé en ce que**, à l'étape b), on détermine les valeurs desdits paramètres du modèle linéaire, au moins à l'aide d'un modèle non linéaire.

4. Procédé selon l'une des revendications 1 à 3,
**caractérisé en ce que**, à l'étape b), on détermine les valeurs desdits paramètres du modèle linéaire, au moins à l'aide d'au moins une base de données préétablie.

5. Procédé selon la revendication 4,
**caractérisé en ce que** ladite base de données est établie à l'aide d'un modèle non linéaire.

6. Procédé selon la revendication 4,
**caractérisé en ce que** ladite base de données est établie à partir de mesures réalisées lors d'au moins un déplacement dudit mobile.

7. Procédé selon l'une quelconque des revendications 1 à 6,
**caractérisé en ce que**, à l'étape b), on détermine les valeurs desdits paramètres du modèle linéaire, au moins à l'aide de relations permettant de définir ces paramètres directement à partir du vecteur λ.

8. Dispositif pour déterminer en temps réel le comportement d'un mobile, en particulier d'un aéronef,
**caractérisé en ce qu'**il comporte :

- des premiers moyens (2) pour déterminer, à partir d'un modèle linéaire courant modélisant le comportement du mobile, un vecteur λ illustrant un état d'équilibre ;
- des deuxièmes moyens (3) reliés auxdits premiers moyens (2), pour déterminer, à partir de ce vecteur λ, les valeurs à l'équilibre de paramètres dudit modèle linéaire ;
- des troisièmes moyens (5) reliés auxdits deuxièmes moyens (3), pour calculer, à partir d'au moins certaines de ces valeurs, la composante dynamique du comportement du mobile ; et
- des quatrièmes moyens (7) reliés auxdits premiers et troisièmes moyens (2, 5), pour introduire cette composante dynamique dans ledit modèle linéaire de manière à obtenir un nouveau modèle linéaire courant et en déduire le comportement dudit mobile.

**Patentansprüche**

1. Verfahren zur Echtzeitbestimmung des Verhaltens eines Fahrzeugs, insbesondere eines Luftfahrzeugs,
**dadurch gekennzeichnet, dass** wiederholt die folgenden aufeinanderfolgenden Vorgänge ausgeführt werden:

a) ausgehend von einem laufenden linearen Modell, das das Verhalten des Fahrzeugs modelliert, wird ein Vektor λ bestimmt, der einen Gleichgewichtszustand darstellt;

b) ausgehend von diesem Vektor λ, werden die Gleichgewichtswerte von Parametern des linearen Modells bestimmt;

c) ausgehend von mindestens bestimmten dieser Werte wird die dynamische Verhaltenskomponente des Fahrzeugs berechnet; und

d) diese dynamische Komponente wird in das lineare Modell eingeführt, um ein neues laufendes lineares Modell zu erhalten und daraus das Verhalten des Fahrzeugs abzuleiten.

2. Verfahren nach Anspruch 1, **dadurch gekennzeichnet, dass** die Parameter des linearen Modells, deren Werte im Schritt b) bestimmt werden, sind:

   - ein Zustandsvektor;
   - ein Steuervektor;
   - ein Beobachtungsvektor;
   - eine Zustandsmatrix;
   - eine Steuermatrix; und
   - eine Beobachtungsmatrix.

3. Verfahren nach einem der Ansprüche 1 und 2, **dadurch gekennzeichnet, dass** im Schritt b) die Werte der Parameter des linearen Modells zumindest mit Hilfe eines nicht-linearen Modells bestimmt werden.

4. Verfahren nach einem der Ansprüche 1 bis 3, **dadurch gekennzeichnet, dass** im Schritt b) die Werte der Parameter des linearen Modells zumindest mit Hilfe einer vorher festgelegten Datenbasis bestimmt werden.

5. Verfahren nach Anspruch 4, **dadurch gekennzeichnet, dass** die Datenbasis mit Hilfe eines nicht-linearen Modells festgelegt wird.

6. Verfahren nach Anspruch 4, **dadurch gekennzeichnet, dass** die Datenbasis ausgehend von Messungen festgelegt wird, die während mindestens einer Bewegung des Fahrzeugs durchgeführt wurden.

7. Verfahren nach einem der Ansprüche 1 bis 6, **dadurch gekennzeichnet, dass** im Schritt b) die Werte der Parameter des linearen Modells zumindest mit Hilfe von Beziehungen bestimmt werden, die es ermöglichen, diese Parameter direkt ausgehend vom Vektor $\lambda$ zu definieren.

8. Vorrichtung zur Echtzeitbestimmung des Verhaltens eines Fahrzeugs, insbesondere eines Luftfahrzeugs, **dadurch gekennzeichnet, dass** sie aufweist:

   - erste Mittel (2), um ausgehend von einem laufenden linearen Modell, das das Verhalten des Fahrzeugs modelliert, einen einen Gleichgewichtszustand darstellenden Vektor $\lambda$ zu bestimmen;
   - zweite Mittel (3), die mit den ersten Mitteln (2) verbunden sind, um ausgehend von diesem Vektor $\lambda$ die Gleichgewichtswerte der Parameter des linearen Modells zu bestimmen;
   - dritte Mittel (5), die mit den zweiten Mitteln (3) verbunden sind, um ausgehend von mindestens bestimmten dieser Werte die dynamische Verhaltenskomponente des Fahrzeugs zu berechnen; und
   - vierte Mittel (7), die mit den ersten und dritten Mitteln (2, 5) verbunden sind, um diese dynamische Komponente in das lineare Modell einzuführen, um ein neues laufendes lineares Modell zu erhalten und daraus das Verhalten des Fahrzeugs abzuleiten.

**Claims**

1. A method of determining in real time the behaviour of a moving object, in particular an aircraft, **characterised in that** the following successive operations are performed in repetitive manner:

   a) from a current linear model modelling the behaviour of the moving object, a vector $\lambda$ illustrating a state of equilibrium is determined;

   b) from this vector $\lambda$, the values at equilibrium of parameters of the said linear model are determined;

   c) from at least some of these values, the dynamic component of the behaviour of the moving object is calculated; and

   d) this dynamic component is applied to the said linear model to obtain a new current linear model and to deduce therefrom the behaviour of the said moving object.

**2.** A method according to Claim 1,
**characterised in that** the parameters of the linear model whereof the values are determined in step b) are:

- a state vector;
- a control vector;
- an observed vector;
- a state matrix;
- a control matrix; and
- an observed matrix.

**3.** A method according to either of Claims 1 and 2,
**characterised in that** in step b) the values of the said parameters of the linear model are determined at least with the aid of a non-linear model.

**4.** A method according to one of Claims 1 to 3,
**characterised in that** in step b) the values of the said parameters of the linear model are determined at least with the aid of a pre-established database.

**5.** A method according to Claim 4,
**characterised in that** the said database is established with the aid of a non-linear model.

**6.** A method according to Claim 4,
**characterised in that** the said database is established from measurements made during at least one movement of the said moving object.

**7.** A method according to any one of Claims 1 to 6,
**characterised in that** in step b) the values of the said parameters of the linear model are determined at least with the aid of relationships allowing these parameters to be defined directly from the vector $\lambda$.

**8.** A device for determining in real time the behaviour of a moving object, in particular an aircraft,
**characterised in that** it includes:

- first means (2) for determining, from a current linear model modelling the behaviour of the moving object, a vector $\lambda$ illustrating a state of equilibrium;
- second means (3) connected to the said first means (2) for determining, from this vector $\lambda$, the values at equilibrium of parameters of the said linear model;
- third means (5) connected to the said second means (3) for calculating, from at least some of these values, the dynamic component of the behaviour of the moving object; and
- fourth means (7) connected to the said first and third means (2, 5) for applying this dynamic component to the said linear model to obtain a new current linear model and to deduce therefrom the behaviour of the said moving object.

Fig. 1

Fig. 2

EP 1 312 998 B1